Europäisches Patentamt

European Patent Office

Office européen des brevets

(11) Veröffentlichungsnummer: **0 280 360 B1**

(19)

# EUROPÄISCHE PATENTSCHRIFT

(12)

(45) Veröffentlichungstag der Patentschrift: **18.03.92**

(51) Int. Cl.⁵: **B01D 51/00**, B03C 3/16, B05B 15/04

(21) Anmeldenummer: **88200267.8**

(22) Anmeldetag: **13.02.88**

(54) **Verfahren und Vorrichtung zur Reinigung von Abluft aus Farb- oder Lackspritzkabinen.**

(30) Priorität: **21.02.87 DE 3705634**

(43) Veröffentlichungstag der Anmeldung:
**31.08.88 Patentblatt 88/35**

(45) Bekanntmachung des Hinweises auf die
Patenterteilung:
**18.03.92 Patentblatt 92/12**

(84) Benannte Vertragsstaaten:
**DE FR GB IT SE**

(56) Entgegenhaltungen:
**EP-A- 0 047 432**

(73) Patentinhaber: **METALLGESELLSCHAFT AG**
**Reuterweg 14 Postfach 3724**
**W-6000 Frankfurt/M.1(DE)**

(72) Erfinder: **Gocht, Paul-Gerhard**
**Breubergstrasse 4**
**W-6082 Mörfelden-Walldorf(DE)**

EP 0 280 360 B1

**Beschreibung**

Die Erfindung bezieht sich auf ein Verfahren und eine Vorrichtung zur Reinigung der Abluft aus einer Farb- oder Lackspritzkabine, bei dem das benutzte Waschwasser im Kreislauf geführt wird.

Derartige Verfahren und Vorrichtungen sind aus den nachfolgend, in chronologischer Reihenfolge gewürdigten Druckschriften bekannt.

Die US-A-3 421 293 betrifft eine Vorrichtung zur Abtrennung von Farbe aus der Abluft einer Farbspritzkabine, bei der die Abluft unterhalb des gitterartigen Kabinenbodens in intensiven Kontakt mit im Kreislauf geführtem Waschwasser gebracht wird, so daß nach Abtrennung der Abluft vom Wasser die aus der Kabine abgeführte Farbe im wesentlichen nur noch im Waschwasser vorhanden ist. Das Wasser ist mit Chemikalien versetzt, die den Wascheffekt verbessern und die Reinigung des Waschwassers erleichtern sollen.

Die aus der DE-B-21 61 198, DE-B-2 412 988 und DE-C-28 14 276 bekanntgewordenen Vorrichtungen arbeiten nach dem gleichen Prinzip, ohne daß in jedem Fall auch die Waschwasserrückführung erwähnt ist. Besonderer Wert wird auf die Ausgestaltung der Anlageteile gelegt, die für den Kontakt zwischen Abluft und Waschwasser maßgeblich sind. In diesem Zusammenhang wird eine bessere Reinigungsleistung bei geringerem Geräuschpegel angestrebt.

Bei dem Verfahren gemäß europäischer Patentschrift EP-A-0 047 432 wird der Abluftwäscher als erste Reinigungsstufe vorausgesetzt und eine zweite Reinigungsstufe mittels Naßelektrofilter vorgeschlagen, wobei die Spülflüssigkeit und die gereinigte Abluft teilweise im Kreislauf geführt werden sollen.

Die DE-C-30 42 464 geht von der Aufgabe aus, den Energieaufwand der bekannten Wäscherkonstruktionen zu verringern bzw. bei gleichem Energieaufwand eine bessere Reinigungswirkung zu erzielen. Vorgeschlagen wird eine bestimmte konstruktive Ausgestaltung des Wäschergehäuses, insbesondere im Bereich seines engsten Querschnitts.

In der DE-A-35 17 392 schließlich wird vorgeschlagen, nach der üblichen Waschvorrichtung eine zweite Waschstufe mit einem in dem engsten Querschnitt eines Venturirohres zerstäubten Wasserstrahl vorzusehen und stromab davon noch eine Trennschleuder mit Wasserrückführung anzuordnen. Alternativ ist noch eine weitere Reinigungsstufe vorgesehen, nach der ein Teil der gereinigten Abluft in die Lackspritzkabine rückgeführt wird.

Die bekannten Verfahren benutzen ausnahmslos als erste und meist sogar einzige Reinigungsstufe einen Wäscher, was in vielfacher Hinsicht sehr nachteilig ist. An erster Stelle ist der für eine effektive Reinigung unvermeidlich hohe Druckverlust des Abluftstroms bei der Verdüsung des Waschwassers im engsten Querschnitt des Wäschers zu nennen. Hinzu kommt, daß damit auch eine erhebliche Geräuschentwicklung verbunden ist. Schließlich kann auch die Luftführung in der Spritzkabine nicht optimal sein, weil der Abluftstrom auf einem verhältnismäßig kurzen Weg unterhalb des gitterartigen Kabinenbodens auf einen sehr engen Querschnitt eingeschnürt werden muß.

Weitere Nachteile sind bei den Wäschern auf der Wasserseite zu verzeichnen. Es werden verhältnismäßig große Wassermengen benötigt, um die großen, sich trichterförmig verengenden Leitflächen für den Abluftstrom zu bespülen. Daraus folgt, daß entsprechend große Einrichtungen, seien es Absetzbecken oder Vorrichtungen zur aktiven Abtrennung der Lackpartikel aus dem Waschwasser, zur Verfügung gestellt werden müssen. Außerdem werden entsprechend hohe Mengen an Chemikalien benötigt, um die Lackpartikel besser an das Waschwasser zu binden und sie schließlich auch besser wieder daraus abtrennen zu können. Der allgemein übliche Gebrauch von chemischen Flockungs- und Absetzmitteln bewirkt ferner, daß die aus dem Waschwasser abgetrennten Farb- und Lackstoffe für eine wirtschaftliche Rückgewinnung der darin enthaltenen Wertstoffe unbrauchbar sind und hohe Deponiekosten verursachen.

Es besteht somit die Aufgabe, bei einem Verfahren der eingangs genannten Art die geschilderten Nachteile zu vermeiden und ein Verfahren zu entwickeln, daß insgesamt wesentlich wirtschaftlicher betrieben werden kann.

Zur Lösung dieser Aufgabe wird vorgeschlagen, die Abluft ohne vorherige anderweitige Behandlung mit Waschwasser zu bedüsen und dann direkt einem Naßelektrofilter zuzuführen. Überraschenderweise hat sich herausgestellt, daß ein Naßelektrofilter, das bereits als zweite Reinigungsstufe hinter einem Wäscher für die Abluftreinigung eingesetzt worden ist, ohne Schwierigkeiten auch als erste - bzw. je nach Anforderung auch einzige - Reinigungsstufe einsetzbar ist, wenn es unmittelbar unterhalb des gitterartigen Bodens einer Farb- oder Lackspritzkabine angeordnet ist. Umfangreiche Versuche haben ergeben, daß die Abscheideleistung eines Naßelektrofilters sogar besser ist, als die der üblicherweise verwendeten Wäscher. Das ist vor allem deswegen überraschend, weil der Druckverlust im Abluftstrom bei Verwendung eines Naßelektrofilters nur ein Bruchteil derjenigen Werte beträgt, die für Wäscher veranschlagt werden müssen. Bessere Effektivität und geringerer Energieverbrauch des Naßelektrofilters gegenüber dem Wäscher, sind vor allem darauf zurückzuführen, daß das Waschwasser beim Naßelektrofilter mit entsprechend hohem Druck auf der Wasserseite verdüst wird, während beim Wäscher die Schaffung feinster Waschwasserpartikel durch die Einwirkung des Abluftstroms erfolgen muß. Aus der unterschiedlichen Art der Waschwasserzuführung und Zerstäubung ergibt sich der weitere Vorteil, daß beim Naßelektrofilter wesentlich weniger Waschwasser benötigt wird, um eine bestimmte Abluftmenge zu reinigen. Daraus folgt unmittelbar, daß -je nach Wasseraufbereitung - auch nur entsprechend kleinere Absetzbecken bzw. Wasserreinigungseinrichtungen erforderlich sind.

Als besonders vorteilhaft hat sich erwiesen, daß die aus dem Abluftstrom elektrostatisch abgeschiedenen Farb- und Lackpartikel ohne Verwendung der gebräuchlichen chemischen Mittel aus dem Waschwasser abgetrennt werden können, womit die Möglichkeit eröffnet ist, Deponiekosten zu sparen und die abgeschiedenen Farb- und Lackreste einer Wiederverwendung zuzuführen.

Schließlich muß auch erwähnt werden, daß bei der Verwendung eines Naßelektrofilters anstelle eines Wäschers der Abluftstrom unterhalb des gitterartigen Kabinenbodens nicht eingeschnürt werden muß, daß damit auch eine Geräuschentwicklung entfällt und daß die Luftführung in der Kabine selbst vorteilhafter gestaltet werden kann.

Zusammenfassend kann festgestellt werden, daß das erfindungsgemäße Verfahren alle im Rahmen der Aufgabenstellung erwähnten Bedingungen erfüllt und eine technisch und wirtschaftlich wesentlich bessere Alternative zu den bekannten Waschverfahren darstellt.

Vorteilhafte Ausgestaltungen und Ergänzungen des Verfahrens sind in den Ansprüchen 2 bis 7 erwähnt. Zur Durchführung des Verfahrens wird eine Vorrichtung vorgeschlagen, die gekennzeichnet ist durch

a) ein unmittelbar unter dem Gitterboden einer von oben nach unten belüfteten Lackierkabine angeordnetes Naßelektrofilter mit strömungsseitig vorgeschalteter Einrichtung zum Bedüsen des Abluftstroms mit Waschwasser,

b) unterhalb des Naßelektrofilters angeordneten, üblichen Einrichtungen für das Sammeln des ablaufenden Waschwassers und üblichen Kanälen für das Absaugen der Abluft sowie

c) an sich bekannte Einrichtungen für das Rückführen der Abluft in die Lackierkabine bzw. des Waschwassers in die Bedüsungseinrichtung.

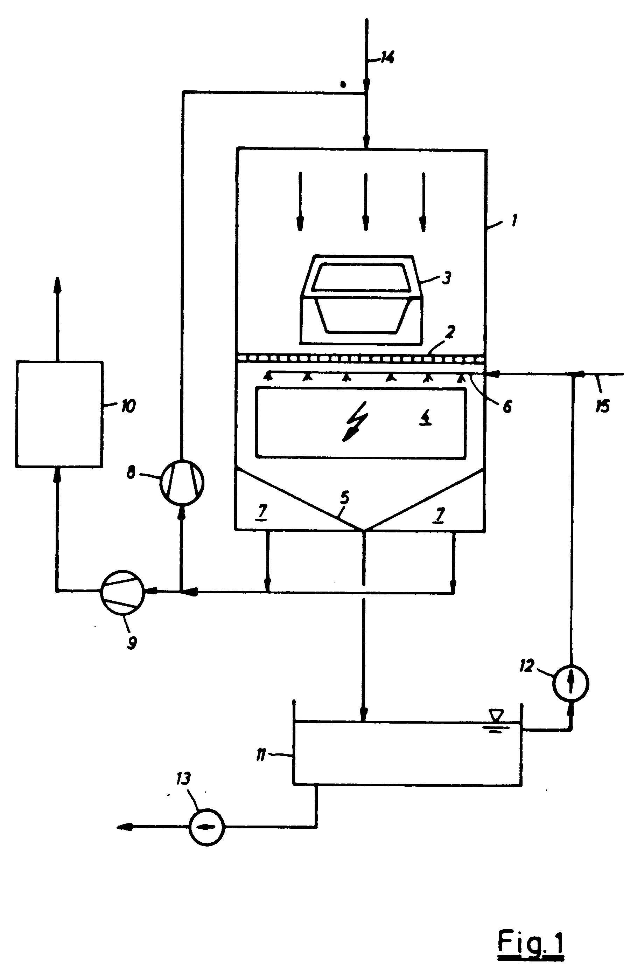

Weitere Einzelheiten und Vorteile der Erfindung werden anhand des in Figur 1 dargestellten Ablaufschemas näher erläutert.

In der Lackspritzkabine (1) mit gitterartigem Boden (2) ist vereinfacht eine Autokarosserie (3) dargestellt. Diese wird von hand oder mittels Automaten im Spritzverfahren lackiert. Die dabei im Überschuß anfallenden Lacknebel werden mit einem abwärts gerichteten Luftstrom durch den gitterartigen Boden (2) aus der Lackspritzkabine (1) abgeführt. Unmittelbar unterhalb des Bodens (2) ist eine Bedüsungseinrichtung (6) vorgesehen, durch die der Abluftstrom mit feinsten Waschwasserpartikeln gemischt wird, bevor er in das Naßelektrofilter (4) eintritt, das ebenfalls unmittelbar unterhalb des Bodens (2) angeordnet ist. Während der Abluftstrom mittels Gebläse (8) über die Kanäle (7) ab und im Kreislauf geführt wird, wird das Waschwasser über die Ablaufflächen (5) gesammelt und in ein Absetzbecken (11) geleitet. Von hier aus wird der größte Teil des Waschwassers mittels Pumpe (12) wieder in die Bedüsungseinrichtung (6) geschickt und nur ein kleinerer Teil mit den wiederverwendbaren Farb- und Lackresten über die Pumpe (13) aus dem System abgezogen. Frisches Waschwasser wird über die Leitung (15) ergänzt. Ein Teil der von Farb- und Lackanteilen gereinigten Abluft wird mittels Gebläse (9) aus dem Kreislauf ausgeschleust, im Adsorber (10) von Lösungsmittelresten befreit und dann in die Atmosphäre abgegeben. Über die Leitung (14) wird frische Luft in das System eingeführt.

**Patentansprüche**

1. Verfahren zur Reinigung von Abluft aus einer Farb- oder Lackspritzkabine, bei dem das benutzte Wasser im Kreislauf geführt wird, wobei die Abluft ohne vorherige anderweitige Behandlung mit Waschwasser bedüst und dann direkt einem Naßelektrofilter zugeführt wird.

2. Verfahren nach Anspruch 1, bei dem 70 bis 90% der im Naßelektrofilter gereinigten Luftmenge im Kreislauf geführt werden.

3. Verfahren nach Anspruch 1 oder 2, bei dem 10 bis 30% der im Naßelektrofilter gereinigten Luftmenge in einem Adsorber nachgereinigt und in die Atmosphäre abgegeben werden.

4. Verfahren nach einem der Ansprüche 1 bis 3, bei dem das aus dem Naßelektrofilter ablaufende, von Farb- und Lackpartikeln gereinigte Waschwasser gesammelt und zur Bedüsung der Abluft rückgeführt wird.

5. Verfahren nach einem der Ansprüche 1 bis 4, bei dem die aus der Abluft abgetrennten Farb- und Lackpartikel mit 10 bis 30% des aus dem Naßelektrofilter ablaufenden Waschwassers aus dem System abgeführt werden.

6. Verfahren nach einem der Ansprüche 1, 2, 3 oder 5, bei dem das aus dem Naßelektrofilter ablaufende Waschwasser in ein Absetzbecken geleitet wird, aus dem die zum Bedüsen der Abluft bzw. zum Abtransport der Farb- und Lackpartikel benutzten Waschwassermengen getrennt abgezogen werden.

7. Verfahren nach Anspruch 6, bei dem die Farb- und Lackpartikel aus der zum Abtransport benutzten Wassermenge abgetrennt und diese Wassermenge ebenfalls rückgeführt wird.

8. Vorrichtung zur Durchführung des Verfahrens nach den Ansprüchen 1 bis 7, bestehend aus
    a) einem unmittelbar unter dem Gitterboden (2) einer von oben nach unten belüfteten Lackierkabine (1) angeordneten Naßelektrofilter (4) mit strömungsseitig vorgeschalteter Einrichtung (6) zum Bedüsen des Abluftstroms mit Waschwasser,
    b) unterhalb des Naßelektrofilters (4) angeordneten, üblichen Einrichtungen (5) für das Sammeln des ablaufenden Waschwassers und üblichen Kanälen (7) für das Absaugen der Abluft sowie
    c) an sich bekannten Einrichtungen (8) bzw. (12) für das Rückführen der Abluft in die Lackierkabine (1) bzw. des Waschwassers in die Bedüsungseinrichtung (6).

## Claims

1. Method for cleaning waste air from a paint spraying or lacquer spraying booth, in which the used water is recycled, wherein the waste air is sprayed with washing water without other prior treatment and is then supplied directly to a wet electrostatic filter.

2. Method according to Claim 1, in which 70 to 90% of the quantity of air cleaned in the wet electrostatic filter is recycled.

3. Method according to Claim 1 or 2, in which 10 to 30% of the quantity of air cleaned in the wet electrostatic filter is subsequently cleaned in an adsorber and is discharged into the atmosphere.

4. Method according to one of Claims 1 to 3, in which the washing water emerging from the wet electrostatic filter, which water has been cleaned of paint and lacquer particles, is collected and recycled for spraying the waste gas.

5. Method according to one of Claims 1 to 4, in which the paint and lacquer particles separated out of the waste air are carried out of the system with 10 to 30% of the washing water emerging from the wet electrostatic filter.

6. Method according to one of Claims 1, 2, 3 or 5, in which the washing water emerging from the wet electrostatic filter is passed into a settling tank, from which the quantities of washing water used for spraying the waste air or for carrying away the paint and lacquer particles are drawn off separately.

7. Method according to Claim 6, in which the paint and lacquer particles are separated out of the quantity of water used for carrying away and this quantity of water is likewise recycled.

8. Apparatus for performing the method according to Claims 1 to 7, consisting of
    a) a wet electrostatic filter (4) located directly beneath the grate-like floor (2) of a paint-spraying booth (1) which is ventilated from top to bottom, which filter has a preceding means (6) on the flow side for spraying the stream of waste air with washing water,
    b) conventional means (5) for collecting the washing water draining off and conventional channels (7) for drawing off the waste air, located beneath the wet electrostatic filter (4), and
    c) known means (8) and (12) respectively for recycling the waste air into the paint-spraying booth (1) and the washing water into the spraying means (6).

## Revendications

1. Procédé d'épuration de l'air évacué d'une cabine de peinture au pistolet dans lequel l'eau utilisée circule en circuit fermé, l'air évacué recevant en pulvérisation, sans autre traitement préalable, de l'eau de lavage, et étant ensuite envoyée directement à un électrofiltre en voie humide.

2. Procédé suivant la revendication 1, dans lequel de 70 à 90 % de la quantité d'air épuré dans l'électrofiltre en voie humide circulent en circuit fermé.

3. Procédé suivant la revendication 1 ou 2, dans lequel de 10 à 30 % de la quantité d'air épuré dans l'électrofiltre en voie humide subit une post-épuration dans un adsorbeur et est envoyé à l'atmosphère.

4. Procédé suivant l'une des revendications 1 à 3, dans lequel l'eau de lavage s'écoulant de l'électrofiltre en voie humide et épurée des particules de peinture et de vernis est collectée et est recyclée en vue d'être projetée sur l'air évacué.

5. Procédé suivant l'une des revendications 1 à 4, dans lequel les particules de peinture et de vernis séparés de l'air évacué sont évacuées du système avec de 10 à 30 % de l'eau de lavage s'écoulant de l'électrofiltre en voie humide.

6. Procédé suivant l'une des revendications 1, 2, 3 ou 5, dans lequel l'eau de lavage s'écoulant de l'électrofiltre en voie humide est envoyée dans un bassin de décantation duquel sont soutirées indépendamment les quantités d'eau de lavage utilisées en vue d'être pulvérisées sur l'air évacué et pour l'évacuation des particules de peinture et de vernis.

7. Procédé suivant la revendication 6, dans lequel les particule de peinture et de vernis sont également séparées de la quantité d'eau utilisée pour l'évacuation et cette quantité d'eau est également recyclée.

8. Dispositif pour la mise en oeuvre du procédé suivant l'une des revendications 1 à 7, constitué

   a) d'un filtre en voie humide (4) disposé directement en-dessous du caillebotis (2) d'une cabine de peinture (1) parcourue de haut en bas par de l'air, le filtre ayant un dispositif (6), en amont dans le sens du courant, destiné à pulvériser de l'eau de lavage sur le courant d'air évacué,

   b) de dispositifs (5) habituels disposés en-dessous de l'électrofiltre en voie humide (4) et destinés à collecter l'eau de lavage s'écoulant et des canaux (7) habituels pour l'aspiration de l'air évacué, ainsi que

   c) de dispositifs (8 et 12), en soi connus, de recyclage de l'air évacué à la cabine de peinture (1) ou de l'eau de lavage au dispositif de pulvérisation (6).

Fig.1